# EUROPEAN PATENT APPLICATION

(11) **EP 4 390 974 A2**
(43) Date of publication of application: **26.06.2024**
(21) Application number: 23212744.9
(22) Date of filing: 28.11.2023
(51) Int. Cl.: G21K 1/00, G06N 10/00

(54) **MAGNETIC FIELD COIL INTEGRATED INTO ION TRAP**

(30) Priority: 19.12.2022 US 202218083920
(71) Applicant: Infineon Technologies Austria AG, 9500 Villach (AT)
(72) Inventor: BRANDL, Matthias, 85614 Kirchseeon (DE)
(74) Representative: Lambsdorff & Lange Patentanwälte Partnerschaft mbB

(57) **Abstract**

A system (200) for trapping an ion, including one or more lane elements (212) in a substrate, one or more direct current (DC) elements in the substrate and connected to an electrode controller (202), one or more radio frequency (RF) electrodes (218), an RF controller (216) connected to the one or more RF electrodes and configured to provide an RF signal to the one or more RF electrodes, one or more magnetic coils (220) each having a portion associated with at least a portion of a DC element of the one or more DC elements and configured to be superconductive below a critical superconducting temperature, and a magnetic coil controller (114) connected to each magnetic coil of the one or more magnetic coils, where the magnetic coil controller is configured to control the superconductivity and the magnetic flux of each magnetic coil of the one or more magnetic coils in relation to a source magnetic field.

## Description

### TECHNICAL FIELD

The present invention relates generally to a system and method for handing ions in ion traps such as trapped ion quantum computing (TIQC) systems and trapped ion quantum clocks, and, in particular embodiments, to a system and method for providing magnetic fields using superconducting magnetic coils that are integrated into the ion traps.

### BACKGROUND

Generally, ion traps may be paul ion traps used for trapped ion quantum computing or atomic clocks, with ions used as qubits for computation or references for precise calculation of time, the excitation state of an electron indicating a logical value or logic state. Ions such as barium (Ba), magnesium (Mg), calcium (Ca), beryllium (Be), or the like, may be positively charged, and a single electron in the outer shall of the ion used as the logic element. In quantum computing, two or more ions may be entangled, as changing the state of one qubit causes the entangled qubits to change their state immediately, providing substantial speed and power savings over conventional computing. Additionally, ion traps may be used in atomic clocks, where the internal state of the ion is used as a frequency reference, for example for the definition of a second.

However, ion traps require a well-controlled environment, and precise handling of the ions. Generally, ions in an ion trap are trapped or controlled using a radio frequency (RF) field operating at around 200 volts, and 20 megahertz (MHz). Additionally, ions, like any quantum system, have limited coherence times, requiring rapid handling. However, reliance of ions on their environment leaves the ions sensitive to variations in magnetic fields. Thus, stray magnetic fields resulting from variations in the earth's magnetic fields, solar flares, environmental factors, or the like, can affect the coherence time of trapped ions.

### SUMMARY

An embodiment system includes one or more lane elements disposed in a substrate, an electrode controller, one or more direct current (DC) elements disposed in the substrate and connected to the electrode controller, one or more radio frequency (RF) electrodes, an RF controller connected to the one or more RF electrodes and configured to provide an RF signal to the one or more RF electrodes, one or more magnetic coils, where each magnetic coil of the one or more magnetic coils has a portion associated with at least a portion of a DC element of the one or more DC elements, where each magnetic coil of the one or more magnetic coils is configured to be superconductive below a critical superconducting temperature, and a magnetic coil controller connected to each magnetic coil of the one or more magnetic coils, where the magnetic coil controller is configured to control the superconductivity and the magnetic flux of each magnetic coil of the one or more magnetic coils in relation to a source magnetic field.

An embodiment system includes one or more direct current (DC) elements, an electrode controller connected to each DC element of the one or more DC elements and configured to cause the one or more DC elements to generate a DC field by providing one or more voltages to the one or more DC elements, one or more magnetic coils, where each magnetic coil of the one or more magnetic coils, and where each magnetic coil of the one or more magnetic coils is configured to be superconductive below a critical superconducting temperature, a magnetic coil controller connected to each magnetic coil of the one or more magnetic coils, where the magnetic coil controller is configured to create a localized magnetic field by setting a magnetic field at at least one magnetic coil of the one or more magnetic coils, a plurality of radio frequency (RF) electrodes, and an RF controller connected to each RF electrode of the plurality of RF electrodes, where the RF controller is configured to control contain an ion by providing an RF signal to the plurality of RF electrodes.

An exemplary method includes creating, by a magnetic coil controller connected to each magnetic coil of one or more magnetic coils of a system for trapping ions, a localized magnetic field by setting a magnetic field at least one magnetic coil of the one or more magnetic coils, confining, by an radio frequency (RF) controller connected to each RF electrode of a plurality of RF electrodes of the system, an ion over at least one lane element of the system by providing an RF signal to the plurality of RF electrodes, and controlling, by application of a direct current (DC) voltage applies to one or more DC elements of the system, an ion in the localized magnetic field.

### BRIEF DESCRIPTION OF THE DRAWINGS

For a more complete understanding of the present invention, and the advantages thereof, reference is now made to the following descriptions taken in conjunction with the accompanying drawings, in which:
Fig. 1 is a logical diagram illustrating a system with a magnetic coil controller according to some embodiments;
Fig. 2 is a diagram illustrating a system with integrated magnetic coils according to some embodiments;
Figs. 3A-3C are diagrams illustrating portions of an ion trap with integrated magnetic coils according to some embodiments;
Figs. 4A-4B are diagrams illustrating portions of an ion trap with magnetic coil RF elements according to some embodiments.;
Figs. 5A-5B are diagrams illustrating portions of an ion trap with integrated magnetic coils according to some embodiments;
Figs. 6A-D are diagrams illustrating portions of ion traps with integrated magnetic coils configured to generated magnetic fields with different strengths according to some embodiments;
Fig. 7 is a diagram illustrating an arrangement of magnetic coils according to some embodiments;
Figs. 8A and 8B are diagrams illustrating systems for setting a magnetic field for a magnetic coil according to some embodiments;
Figs. 9A and 9B are diagrams illustrating Paul ion traps with magnetic coils according to some embodiments; and
Fig. 10 is a flow diagram illustrating a method for providing a magnetic field for a system using integrated magnetic coils according to some embodiments.

### DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

Ion trapping is a promising candidate handing entangled ions for quantum computing, atomic clocks, and other technologies dependent on isolating single ions. In Paul traps, the ions are confined via an RF-voltage and an electrostatic potential. In a trapped ion quantum computing system, electric fields may be used to control ions. Similarly, electric fields, including an RF voltage, are used in atomic clocks to trap or otherwise control an ion, with properties of the ion used to define the length of a second. In atomic clocks, it is not necessary for an ion to have any interaction with other ions. An atomic clock may use multiple Paul ion traps to parallelize operation on as many traps as possible so that readings may be taken from multiple ion traps and averaged to increase accuracy of the overall atomic clock.

In order to control these potentials, hundreds, or even thousands, of electrodes must be simultaneously controlled in order to provide the desired electrical fields (E-field). However, the ions in these systems are affected by variations in the magnetic fields within the ion traps created by variations in the Earth's magnetic field and other environmental factors, with spurious magnetic fields or unstable magnetic fields reducing the coherence time of entangled ions. In particular, the ion traps discussed herein may generally be Paul traps, where the traps use RF and DC fields to confine and control ions, and where compensating magnetic fields would not interfere with confinement of the ions since the Paul traps do not use a magnetic field for confinement of the ion. For example, a Zeeman qubit operating at 28 gigahertz per Tesla (GHz/T) or 2.8 megahertz per Gauss (MHz/Gauss) needs a magnetic field stability better than 35 picoTeslas (pT) or 350 nanoGauss (nGauss) to achieve a usable or desirable coherence time. However, the Earth's magnetic field is roughly 0.5 Gauss, or about 50 microTeslas (µT), and may vary due, for example, solar eruptions, which may cause the Earth's magnetic field to change by more than 35 pT.

A system for handling ions for atomic clocks or quantum computing may advantageously use integrated magnetic coils for magnetic field generation to create a localized magnetic field within an ion trap for adjustment of the local magnetic field to eliminate the effects of external magnetic noise. Using the integrated magnetic coils permits the magnetic field to be generated within magnetic shielding, in contrast to an external magnetic field generator. Additionally, using multiple magnetic coils allows local tuning of the magnetic field. The controlled environment of the ion traps in different systems may also be advantageously applied to the magnetic coils, with the magnetic coils being superconducting coils that are kept at superconducting temperatures as part of the environment regulation for the ion trap. The superconducting magnetic coils can be configured with a magnetic field, which the superconducting coils will hold for extremely long times while the superconducting property of the coils is maintained. Setting the magnetic field in a magnetic coil permits the magnetic field for a region to be set, and then any current or external magnetic field may be removed, leaving the magnetic field in place and maintained by the superconducting coil without an external current or other potential source of interference. Thus, one or more magnetic coils in system may be set with a desired magnetic field using a source field from, for example, a second coil. Then, while the magnetic field is set, the magnetic coils may be cooled to superconducting temperature, and the source field removed so that the coils, while superconducting, hold the desired magnetic field.

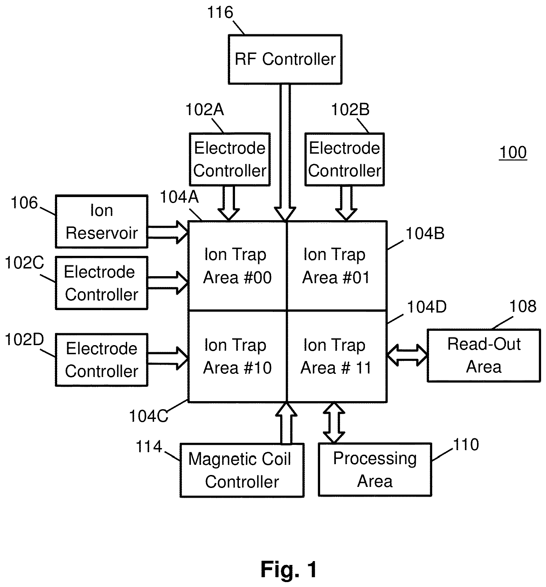

Fig. 1 is a logical diagram illustrating a system 100 with magnetic coil controller according to some embodiments. In some embodiments, the system 100 may be or include, for example, an ion trap, and may, for example, be used in an atomic clock or trapped ion quantum computing system. The system 100 has one or more ion trap areas 104A-104D, and which may be connected to other areas such as an ion reservoir 106, ion read-out area 108, and other areas such as ion disposal areas (not shown), processing areas 110, and between the ion trap areas 104A-104D. The system 100 may also have one or more electrode controllers 102A-102D electrically connected to the ion trap areas 104A-104D to control the ions.

While the system 100 is illustrated with four ion trap areas 104A-104D and four electrode controllers 102A-102D, with the ion trap areas 104A-104D in a symmetrical arrangement, the system 100 is not limited to such an arrangement. The electrode controllers 102A-102D provide addressable voltage control of electrodes, and are, therefore, configured to control any number of cascaded ion trap areas 104A-104D, in any arrangement.

Additionally, the electrode controller 102A-102D may be provided as a unitary controller, with a single controller controlling any number or size of the ion trap areas 104A-104D. The ion trap areas 104A-104D may also be cascaded so that additional ion trap areas 104A-104D and electrode controllers 102A-102D may be connected to existing ion trap areas 104A-104D and electrode controller 102A-102D to expand the system 100, number of ions controlled, and capabilities of the system 100.

The system 100 may have a radio frequency (RF) system with an RF controller 116 that provides an RF containment field separately from the direct current (DC) bias of the DC electrodes. The RF system may apply one or more RF signals to one or more RF electrodes in the ion trap areas 104A...104D to generate local RF fields along lanes, or within a defined trap area to trap an ion in a particular location. The RF field may be provided by RF electrodes that are separate from electrodes used to provide DC voltage fields or other adjustment voltage fields. In some embodiments, the RF field may be operated at around 200 volts, and 20 megahertz (MHz), and the DC fields may be provided locally and separately by the electrode controllers 102A..102D to shuttle, control, move, trap, measure, process, or otherwise handle ions being contained by the RF field.

Additionally, the system 100 may have a magnetic field system that includes a magnetic coil controller 114 that sets one or more magnetic coils in the system with a desired, predetermined, or target magnetic field. While not shown, the magnetic coils may be disposed in the ion trap areas 104A..104D, and may be individually set by the magnetic coil controller 114. In some embodiments, the magnetic coil controller 114 may be configured to provide electrical signals that disable the superconducting properties of the magnetic coils by, for example, heating a portion of the magnetic coil using, for example, a resistive or inductive heater, another superconduction disruption system, a magnetic field disruption system, or the like. The magnetic coil controller 114 may also be configured to provide one or more source magnetic fields to one or more the magnetic coils that are in a non-superconducting state. In some embodiments, the magnetic coil controller 114 may be connected to one or more source coils associated with the magnetic coils, and may provide a current through the source coils to generate a source magnetic that is maintained by the magnetic coils when they are in a superconducting state.

While not shown, the system 100 may also have other features, such as a voltage system to adjust positioning of ions, parasitic systems, control system multiplexing, or the like. These additional features are omitted here for clarity, and the disclosed embodiments of the system 100 are not intended to be limited to only the elements and features disclosed herein.

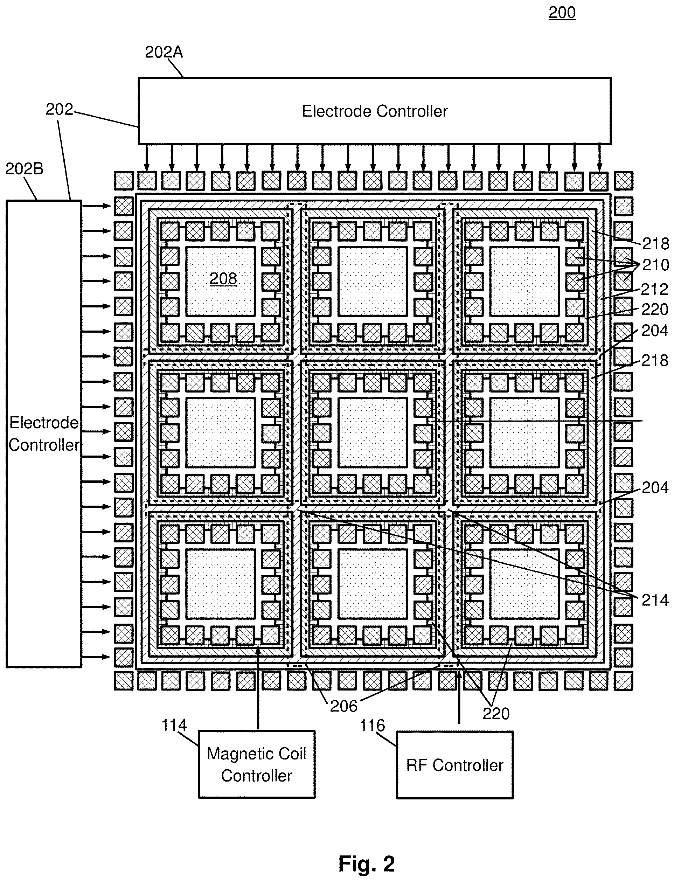

Fig. 2 is a diagram illustrating a system 200 with integrated magnetic coils 220 according to some embodiments. The system 200 includes an electrode controller 202 comprising a first electrode controller portion 202A and second electrode controller portion 202B. The first electrode controller portion 202A and second electrode controller portion 202B may be connected to a set of confinement, shuttling or DC electrodes 210 arranged in a two-dimensional pattern, or in another arrangement with one dimension, or in three dimensions for layered patterns.

The system 200 may have one or more lane elements 212 along which an ion may be trapped, moved, measured, or otherwise controlled. While the lane elements 212 are illustrated here as being a single element, the lane elements 212 may be formed from multiple lane elements 212. Additionally, one or more ground voltages, DC voltages, AC voltages or RF signals may be provided to the lane elements 212 to control an ion by controlling control positioning or movement of ions, causing movement of ions, adjusting or grounding RF fields, or compensating for DC fields.

The system 200 have also additional electrodes such as RF electrodes 218 disposed adjacent to, under, between or near the DC electrodes 210. In some embodiments, the RF electrodes 218 are disposed on each side of a lane element 212, but in other embodiments, may be underneath, or over, the lane elements 212. The RF electrodes 218 may be connected to an RF controller 116 which provides a signal or voltage that causes the RF electrodes 218 to generate an RF fields for controlling or containing an ion over the lane elements 212. In some embodiments, the RF field generated by signals applied to the RF electrodes 218 may hold an ion in controlled position relative to the electrodes, or over a lane element 212, where present.

In some embodiments, control of the ion, such as causing movement, biasing, providing measurement, or trapping the ion is performed by setting a DC voltage on an electrode to create DC bias in the E-field, with the DC bias allowing control of the position of an ion along, or parallel to the lane 204, 206. Changing the voltage on the DC electrodes 210 permits control the ion, and ions may be moved along, biased on, or otherwise controlled on, lanes 204, 206. The lanes 206, 204 may be arranged to cross to form intersections 214 to allow for switching an ion onto different lanes 204, 206 for two dimensional movement. The DC electrodes 210 may be arranged so that free space is created between the DC electrodes 210, and shield elements 208 may be provided to shield the DC electrodes 210 and ions located in lanes 204, 206, from voltages provided for other ions in other locations along the lanes 204, 206. Such an arrangement may reduce cross-talk between ions in the system 200 and simplify production of the system 200. Additionally, while the lanes 204, 206 and DC electrodes 210 are arranged in Fig. 2 in a symmetrical pattern, the DC electrodes 210 and lanes 204, 206 are not limited to such an arrangement, as any arrangement in two dimensions may be provided, including an arrangement where lanes 204, 206 intersect or cross at non-right angles. It should be further noted that lanes 204, 206 are not limited to crossing each other, as the lanes 204, 206 may form a three way, or `T' intersection, or may form a turn or angle, such as an 'L' shaped intersection.

A DC field provided by the DC electrodes 210 causes the ion to move in relation to the electrodes or lane elements 212, and a DC field may adjust the DC field provided by the DC electrodes 210 and shifts the ion. The electrode controller 202 provides a DC biasing voltage to the DC electrodes 210 to ions, for example, by shifting ions in relation to, or moving ion along, shuttling lanes 204, 206. The electrode controller 202 provides a voltage to each DC electrode 210. The electrode controller 202 may address an individual electrode element, which includes the DC electrode 210, and may provide a voltage signal or other signal to set the voltage for a particular DC electrode 210. Thus, the voltage of each DC electrode 210 may be set individually, and is maintained until reset or changed. In some embodiments, the electrode controller 202 addresses the individual DC electrodes 210 using an electrode control or addressing system, which controls application of a voltage to the DC electrodes 210. Thus, the DC electrode 210 in a particular column and row may have a voltage that is set by routing a voltage controlled by a DAC to a latch or storage element, such as a capacitor for the respective DC electrode 210, so that the electrode latch or storage element sets the voltage at the DC electrode 210.

The system 200 may further have one or more magnetic coils 220 that are connected to, or controlled by, a magnetic coil controller 114. The magnetic coil controller 114 may be configured to set a magnetic field for each magnetic coil 220 to provide a uniform or predetermined magnetic field distribution with relatively fine control of the compensating magnetic field across the area of the system 200. A magnetic coil 220 may be provided for each sub region of the system 200, or for each region of the system 200 bordered by lane elements 212. The magnetic coils 220 may, in some embodiments, be associated with each portion of the lane elements 212, with each portion of the lane elements 212 being bordered by, or otherwise associated with, at least one portion of at least one magnetic coil 220. For example, in some embodiments, magnetic coils 220 may be arranged so that magnetic coils 220 abut, or are arranged next to, both sides of the lane elements 212. In other embodiments, the magnetic coils 220 may be arranged underneath the lane elements 212.

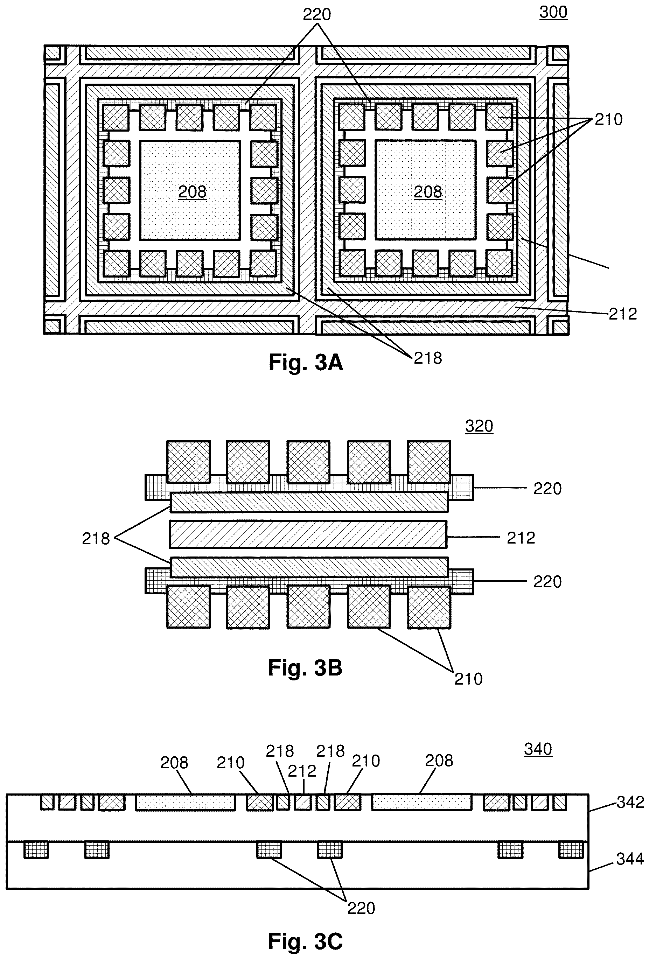

Figs. 3A-3C are diagrams illustrating portions of an ion trap with integrated magnetic coils 220 according to some embodiments. Fig. 3A is a diagram illustrating a top view of an ion trap region 300 with adjacent ion trap portions according to some embodiments. Fig. 3B is a diagram illustrating an ion trap region 320 having a lane element 212 and portions of magnetic coils 220 according to some embodiments. Fig. 3C is a diagram illustrating a side view of an ion trap region 340 with magnetic coils 220. In some embodiments, elements of the ion traps may be formed using semiconductor packaging or fabrication techniques, for example, by depositing conductive material on a substrate and forming electrodes, lane elements, shields, connectors, and the like, in, for example, glass or oxide layers. Additionally, connection layers, such as layers of conductive wiring, may be formed as a stack or on the backside of the system to provide connections to control elements such as multiplexers, DACs, and the like. One or more other devices, such as transistors, or logic gates, or other circuits may also be formed or located on the surface of the system substrate, on the backside of the substrate, on the wiring layers, or the like, to permit integration of the system elements into a package or system-on-chip (SoC). Additionally, any analog or digital circuit may be integrated with the passive part of the ion trap consisting of electrodes and wiring, and integration may be done on the same substrate or using stacked dies.

In the ion trap, one or more metal elements may be formed in a metallization layer, for example, using a damascene etch-and-fill process. The metallization layer may have one or more substrates such as insulator layers, that may be, for example, silicon dioxide, glass, or other insulating materials. In some embodiments, elements such as RF electrodes 218, confinement, shuttling, or DC electrodes 210, shield elements 208, lane elements 212, magnetic coils 220, or the like, may be formed in the metallization layers, and may be a conductive material such as copper, aluminum, gold, a metal alloy, ceramic or silicide, or another conductive material. Additionally, while not shown, connecting wiring may be provided in one or more additional metallization layers or insulator layers to connect the elements to each other or to other elements, such as switches, controllers, DACs, or the like.

Thus, in some embodiments, the RF electrodes 218, lane elements 212 and DC electrodes 210 may be formed in a first layer 342, and the magnetic coils 220 may be formed in a second layer 344. The second layer 344 with the magnetic coils 220 may be formed separately from the first layer 342 with the other elements, so that the arrangement and shape of the magnetic coils 220 may be adjusted or customized for different ion trap arrangements. Additionally, the RF electrodes 218 are spaced apart from the lane elements 212 and from the DC electrodes 210 so that the elements are electrically isolated. In some embodiments, the magnetic coils 220 may be arranged so that the magnetic coil 220 extends from directly under an associated RF electrode 218, across a space, to directly under one or more associated DC electrodes 210.

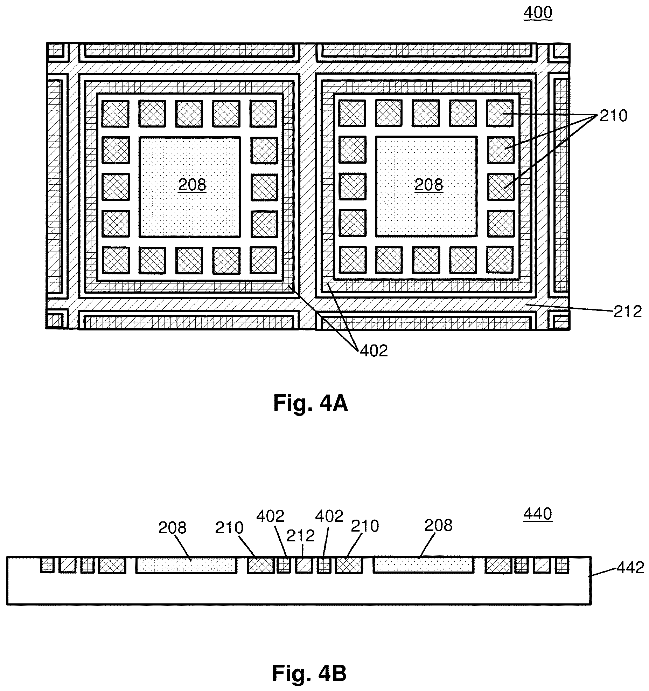

Figs. 4A-4B are diagrams illustrating portions of an ion trap with magnetic coil RF elements 402 according to some embodiments. Fig. 4A is a diagram illustrating a top view of an ion trap region 400 with adjacent ion trap portions and magnetic coil RF elements 402 according to some embodiments. Fig. 4B is a diagram illustrating a side view of an ion trap region 440 with magnetic coil RF elements 402 according to some embodiments. In some embodiments, the RF elements may be connected to both an RF controller and a magnetic coil controller so that the RF elements act as magnetic coils, resulting in magnetic coil RF elements 402. The magnetic coil RF elements 402 may disposed in a first layer 442 with other features such as the DC electrodes 210, lane elements 212, shield elements 208, and the like, and may be connected to the RF controller and magnetic coil controller through wiring (not shown) in the first layer 442. The magnetic coil RF elements 402 may be placed similarly to RF elements, with the magnetic coil RF elements 402 laterally spaced apart from the DC electrodes 210 and lane elements 212, and so that the magnetic coil RF elements 402 have portions that are associated with corresponding portions of the lane elements 212. Thus, in some embodiments, each portion of the lane elements 212 may be disposed between two magnetic coil RF elements 402.

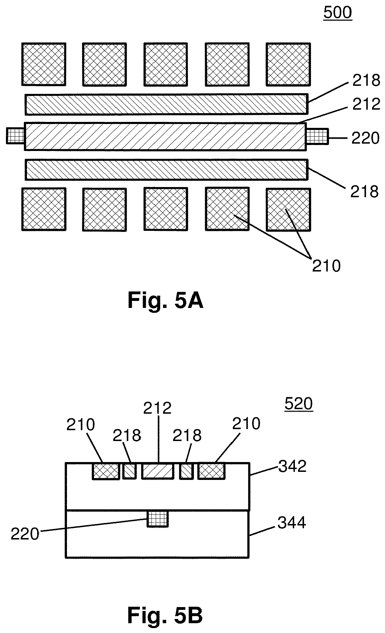

Figs. 5A-5B are diagrams illustrating portions of an ion trap with integrated magnetic coils 220 according to some embodiments. Fig. 5A is a diagram illustrating an ion trap region 500 having a lane element 212 and portions of a magnetic coil 220 under a lane element 212 according to some embodiments. Fig.5B is a diagram illustrating a side view of an ion trap region 520 with a magnetic coil 220 under a lane element 212. In some embodiments, the magnetic coil 220 may be separate from the RF electrodes 218 and the lane elements 212, but may be aligned under the lane elements 212. Thus, the lane elements 212, the RF electrodes 218, and the DC electrodes 210 may be disposed in a first layer 342, and the magnetic coil 220 may be disposed in a second layer 344. In some embodiments, a single portion of a magnetic coil 220 may be associated with a portion of the lane element 212. Additionally, the lane elements 212 may be laterally spaced apart from the DC electrodes 210, and may also be laterally spaced apart from the RF electrodes 218.

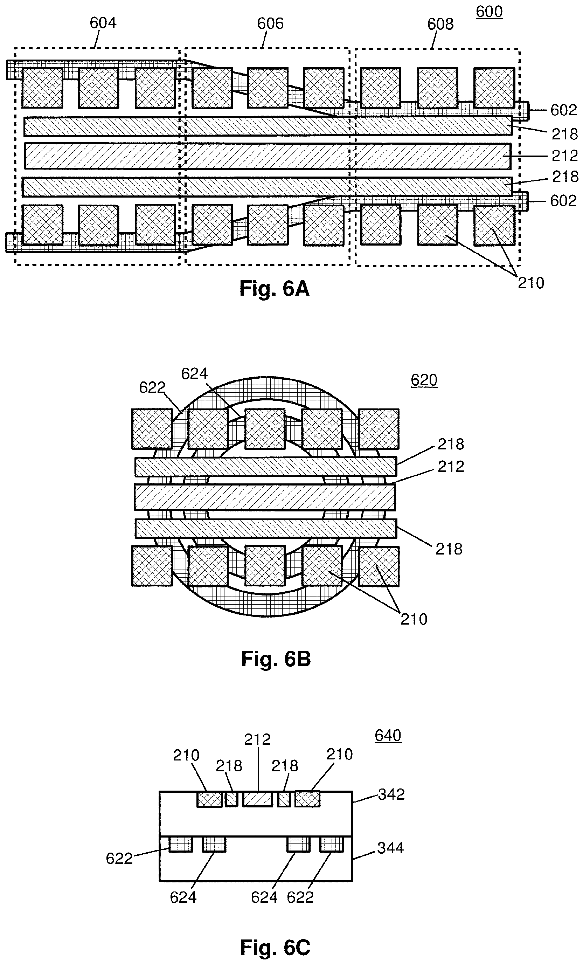

Figs. 6A-D are diagrams illustrating portions of ion traps with integrated magnetic coils configured to generated magnetic fields with different strengths according to some embodiments. Fig. 6A is a diagram illustrating a portion of an ion trap 600 with integrated magnetic coils 602 configured to generated magnetic fields with different strengths in different coil regions 604, 606, 608 according to some embodiments. In some embodiments, magnetic coils 602 may have nonlinear portions or sections so that the magnetic coils 602 have different distances, in different regions of a linear portion of the lane element 212, from the respective portions of the lane element 212. For example, in a low field region 604, a portion of the magnetic coils may be farther from the lane elements 212 than the portion of the magnetic coils 602 in a high field region 608. While the strength of the magnetic field is the same along the length of respective magnetic coils 602, the magnetic field near the lane element 212 will be larger when the magnetic coil 602 is closer to the lane element 212. Since the ion generally travels along the lane element 212, the magnetic field applied to the ion may be varied along a lane element 212 using the same magnetic coils 602 by varying the distance from the lane element 212, or from the ion's travel path, by varying the distance between the lane element 212 and the magnetic coil 602 portions in the respective regions. In some embodiments, the different field strengths, or a gradient field, may be provided based on the uses of an ion in a particular area, with, for example, different fields provided for memory areas compared to processing areas, or the like.

With reference to the DC electrodes 210, inner edges of the DC electrodes 210 are closest to the lane elements 212, and outer edges of the DC electrodes 210 are farthest from the lane elements 212. In some embodiments, in a low field region 604, the magnetic coils 220 are arranged outside of the inner edges of the DC electrodes 210, and may extend at least from directly under the DC electrodes 210 past the outside edges of the DC electrodes 210. The magnetic coils 602 may transition, in a gradient region 606, closer to the lane elements 212, so that, in a high field region 608, the magnetic coils 602 extend from directly under the DC electrodes 210, past the inner edge of the DC electrodes 210 toward the lane elements 212. In some embodiments, the magnetic coils 602, in the high field region 608, may also extend under the RF electrodes 218, or may extend past the RF electrodes 218 to under the lane elements 212.

Fig. 6B-6C are a diagram illustrating portions of an ion trap 620, 640 with integrated magnetic coils 622, 624 associated with a linear portion of the trap and that are configured to generated magnetic fields with different strengths in different coil regions according to some embodiments. Fig. 6B is a top view of the portion of the ion trap 620 with integrated magnetic coils 622, 624 according to some embodiments, and Fig 6C is a side view of the portion of the ion trap 640 with integrated magnetic coils 622, 624 according to some embodiments. In some embodiments, a localized magnetic field maybe provided for a predetermined portion of a lane element 212 by one or more magnetic coils 622, 624 associated with a limited portion or length of the lane elements 212. Multiple magnetic coils 622, 624 may be provided so that the magnetic field may be adjusted by applying different magnetic field strengths to the different magnetic coils. The magnetic coils may include an outer magnetic coil 622 and an inner magnetic coil 624, and the magnetic coils may be separate from each other. Additionally, the lane elements 212, RF electrodes 218 and DC electrodes 210 may be formed in a first layer 342, and the magnetic coils 622, 624 may be formed in a second layer 344.

Additionally, in some embodiments, the inner magnetic coil 624 may have an outer perimeter that is smaller than an inner perimeter of the outer magnetic coil 622, so that the inner magnetic coil 624 is disposed inside the outer magnetic coil 622, permitting the magnetic coils 622, 624to be substantially co-planar. In some embodiments, the magnetic coils 622, 624 may be centered on a lane element 212. The inner magnetic coil 624 may extend from under the lane element, under and past the RF electrodes, and under at least the DC electrodes. The outer magnetic coil 624 may extend from under the lane element 212, under and past the RF electrodes 218, and under and outside of one or more of the DC electrodes 210. Thus, at least at portion of at least the outer magnetic coil 624 may be disposed outside the DC electrodes 210 on each side of the lane element 212.

In some embodiments, an induced current for a particular magnetic coil 622, 624 that will result in a desired magnetic field may be determined, and the magnetic field for each magnetic coil 622, 624 may be individually set by applying a source magnetic field, and then permitting the respective magnetic coil to become superconducting while the source magnetic field is applied. As the magnetic loop maintains an applied field while superconducting, other magnetic coils 622, 624 may be set while the superconducting magnetic coil 622, 624 maintains the applied magnetic field. Thus, different magnetic coils 622, 624 may have different magnetic fields applied, and thus, will have different induced currents.

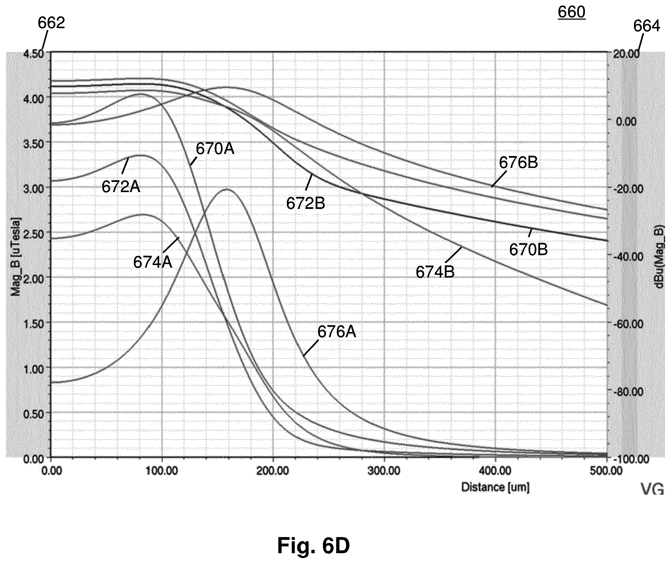

Fig. 6D is a chart 660 illustrating the simulated magnetic field when an outer magnetic coil has different induced currents, and an inner magnetic coil has a constant induced current according to some embodiments. Various magnetic field curves 670A...676B for magnetic field strength on a linear scale 662 and a logarithmic scale 664 are shown in relation to the distance above the magnetic rings 622. In the chart 660, the measurements reflect measurements taken of a magnetic field resulting from an inner magnetic coil with an inner radius of 100 µm, and an outer radius of 150 µm with an induced 1 mA current, and from an outer magnetic coil with an inner radius of 160 µm and an outer radius of 190 µm with varies induced currents. A first linear measurement curve 670A illustrates a magnetic field, measured in the linear scale 662, in relation to distance above the magnetic coils for a 0.1 mA induced current in the outer magnetic ring, and a first logarithmic measurement curve 670B illustrates the same magnetic field in a logarithmic scale 664. A second linear measurement curve 672A illustrates a magnetic field, measured in the linear scale 662, for a 0.3 mA induced current in the outer magnetic ring, and a second logarithmic measurement curve 672B illustrates the same magnetic field in a logarithmic scale 664. A third linear measurement curve 674A illustrates a magnetic field, measured in the linear scale 662, for a 0.5 mA induced current in the outer magnetic ring, and a third logarithmic measurement curve 674B illustrates the same magnetic field in a logarithmic scale 664. A fourth linear measurement curve 676A illustrates a magnetic field, measured in the linear scale 662, for a 1.0 mA induced current in the outer magnetic ring, and a fourth logarithmic measurement curve 676B illustrates the same magnetic field in a logarithmic scale 664. Thus, for the current of 0.5, the field drops the most quickly, particularly when considering the third logarithmic measurement curve 674B. However, a smaller current, such as a 0.1. mA induced current shown in the first linear measurement curve 670A and the first logarithmic measurement curve 670B, may result in a stronger field nearer the magnetic rings, and a less severe field drop-off. Additionally, while two magnetic rings are illustrated here. Other embodiments may include more than two magnetic coils, increasing the complexity of the system, but permitting greater tuning of magnetic field behavior.

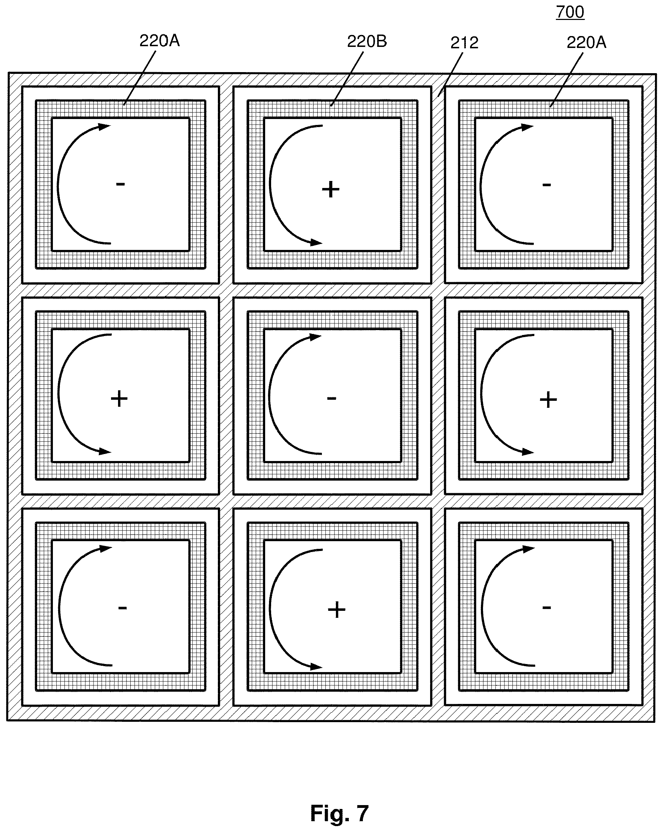

Fig. 7 is a diagram illustrating an arrangement 700 of magnetic coils 220A, 220B according to some embodiments. In some embodiments, the magnetic coils 220A, 220B are arranged in a grid, and magnetic fields may be set so that the magnetic coils 220A, 220B have fields with polarities in a checkerboard pattern. For example, first magnetic coils 220A may have an induced current moving in a clockwise direction, resulting in a magnetic field (using the right-hand rule) that is negative, or entering the shown arrangement 700, in the center of the respective first magnetic coil 220A, away from the viewer. The first magnetic coils 220A may alternate in rows, and in columns, with second magnetic coils 220B that have an induced current moving in a counter clockwise directions. This results in a magnetic field that is positive, or coming out of the shown arrangement 700, in the center of the respective second coil 220B, toward the viewer. Thus, for any particular portion of the lane elements 212 bordered on each side by different magnetic coils 220A, 220B, the magnetic fields created in that region by the different magnetic coils 220A, 220B are in the same direction.

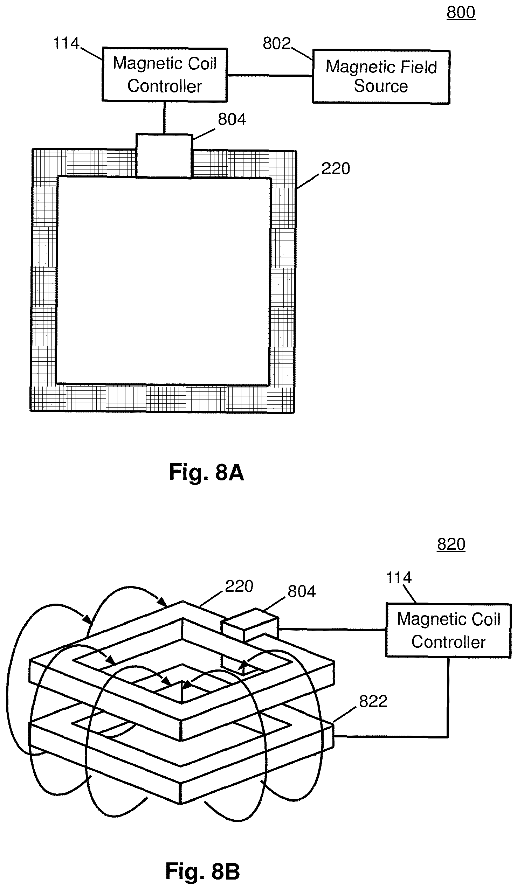

Figs. 8A and 8B are diagrams illustrating systems for setting a magnetic field for a magnetic coil according to some embodiments. Fig. 8A is a diagram illustrating a system 800 for setting a magnetic field for a magnetic coil 220 with a magnetic field source 802 according to some embodiments. In some embodiments, the magnetic coil 220 may have a heater 804, and in some embodiments, the heater 804 may be disposed on a portion of the magnetic coil 220. For example, the heater 804 may be a resistive or infrared (IR) emitting radiative heater, or may be an IR laser focused on a selected spot on the magnetic coil 220, and using a fiber to guide IR light to the selected spot.

The magnetic coil controller 114 may activate the heater 804 to heat a portion of the magnetic coil 220 above a superconducting temperature, where the magnetic coil 220 will no longer maintain a magnetic field without an external current or other magnetic field source. For example, the magnetic coil 220 may be a super conducting material such as niobium (Nb), niobium-titanium (Nb-Ti), yttrium-barium-copper-oxide (YBCO), nickel oxide-titanium nitride (NiO-TiN), a copper oxide (CuO₂), or the like, and the temperature may be raised above, for example, 10 kelvin in the region of the heater 804 to stop the superconductivity of the magnetic coil 220. A magnetic field may be applied by a magnetic field source 802 and maintained while the heater 804 is turned off, permitting the magnetic coil 220 to return back to superconducting temperatures. After the magnetic coil 220 achieves superconductivity again, the magnetic field source is removed or turned off, and the magnetic coil 220 maintains the magnetic flux without external power or magnetic field sources which might cause undesired noise in the ion trap.

In some embodiments the, magnetic field source 802 is a power supply or current supplied through the magnetic coil to induce the magnetic field, and in other embodiments, an external magnetic field may be applied by a source coil associated with the magnetic coil 220, by a large scale external magnetic field supplying a source magnetic field for multiple magnetic coils 220, or the like.

Fig. 8B is a diagram illustrating a system 820 for setting a magnetic field for a magnetic coil 220 with a source coil 822 according to some embodiments. A magnetic coil 220 may have a heater 804 connected to a magnetic coil controller 114, and in some embodiments, may have a source coil 822 connected to the magnetic coil controller 114. The magnetic coil controller 114 causes the heater 804 to heat and stop the superconductivity of the magnetic coil 220. The magnetic coil controller 114 may also cause the source coil 822 to generate a desired source magnetic field. The source coil 822 is arranged so that the generated source magnetic field is applied to the magnetic coil 220, and the source magnetic field is held until the magnetic coil 220 reaches superconductivity, when the magnetic coil 220 will maintain the magnetic flux. The magnetic coil controller 114 may then deactivate the source coil 822, and ions may be controlled by measuring, moving, adjusting, processing, measuring, or otherwise controlling the ion under the effect of the magnetic coil 220.

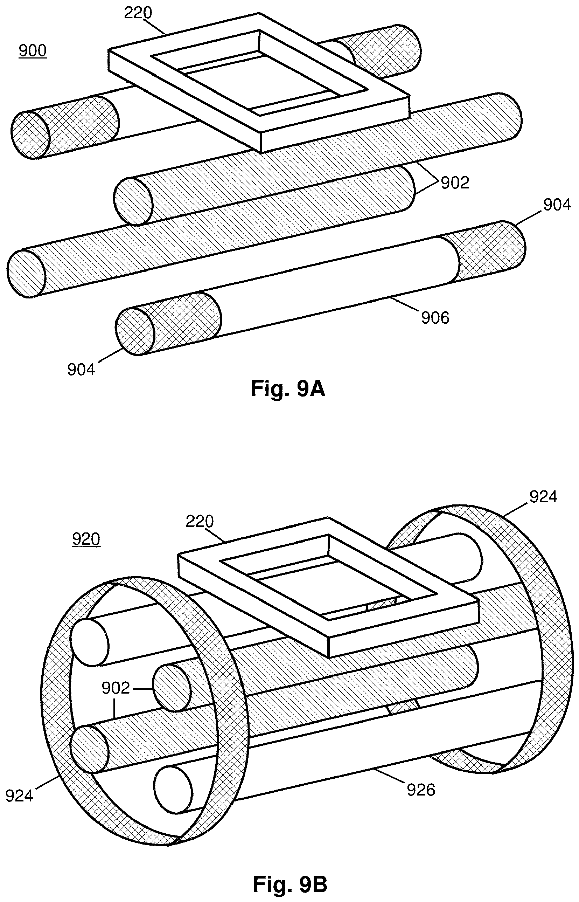

Figs. 9A and 9B are diagrams illustrating Paul ion traps with magnetic coils according to some embodiments. When using a Paul ion trap 900, a superconducting magnetic coil 220 may be integrated into each ion trap 900 to provide a constant magnetic field. Paul traps trap ions using a combination of RF fields and DC fields to retain or trap an ion in a region between ion trapping elements. Thus, a magnetic field is not needed in Paul trap to trap an ion. However, a magnetic field, such as an interfering magnetic field or the Earth's magnetic field, affect internal levels of the ions, which impacts the internal energy level which are used, for example, for quantum state readout. An ion trap may include superconducting magnetic loops embedded in electrodes used to provide DC or RF fields, or may be disposed in a substrate of a planar or 3D ion trap for example, below the trap, as shown above.

Fig. 9A illustrates a Paul ion trap 900 with integrated DC endcap elements 904 according to some embodiments. In the embodiment ion trap 900, ions are trapped using RF fields provided by trapping elements 902, 906 that are separated in space. A magnetic coil 220 may be provided to generate a compensating magnetic field to compensate for undesired or interfering magnetic fields within the ion trap 900. In some embodiments, the ion trap 900 may have a plurality of RF electrodes 902 arranged with a plurality of RF ground elements 906 to bound an ion containment area. In some embodiments, DC endcaps 904 may be DC electrodes that provide DC bias fields for controlling ions in the ion containment area. In some embodiments, the DC endcaps 904 may be provided adjoining the RF ground elements 906. Each RF electrode 902 may be spaced apart from each other RF electrode 902, with one or more RF ground elements 906and DC endcaps 904 between adjacent pairs of the RF electrode 902. Additionally, in some embodiments, the magnetic coil 220 may be disposed adjacent to at least one RF electrode 906, and may also be adjacent to at least one RF ground element 906, with the entirety of the magnetic coil 220 outside of the ion containment area defined by the ion trapping elements 902, 906. In other embodiments, the ion trapping elements 902, 906 may pass though the magnetic coil 220 so that the magnetic coil 220 at least partially surrounds each of the ion trapping elements 902, 906 and the ion containment area defined or bounded by the ion trapping elements 902, 906.

Fig. 9B illustrates a Paul ion trap 920 with separate DC endcaps 924 according to some embodiments. In some embodiments, the ion trap 920 may have a plurality of RF electrodes 902 arranged with a plurality of RF ground elements 926 to bound an ion containment area. The RF ground elements 926 may be about the same length as the RF electrodes 902, and may be free of the DC endcap elements, with DC endcaps being separate from the RF ground elements 926. In some embodiments, DC endcaps 924 may be DC electrodes having a ring or other enclosed loop shape that surround or separate from the RF electrodes 902 and the RF ground elements 926, and may be formed to provide a DC bias field along the length of the ion trap 920. In some embodiments, the magnetic coil 220 may be disposed adjacent to at least one RF electrode 906, and may also be adjacent to at least one RF ground element 906, with the entirety of the magnetic coil 220 outside of the ion containment area defined by the ion trapping elements 902, 906. In other embodiments, the ion trapping elements 902, 906 may pass though the magnetic coil 220 so that the magnetic coil 220 at least partially surrounds each of the ion trapping elements 902, 906 and the ion containment area defined or bounded by the ion trapping elements 902, 906.

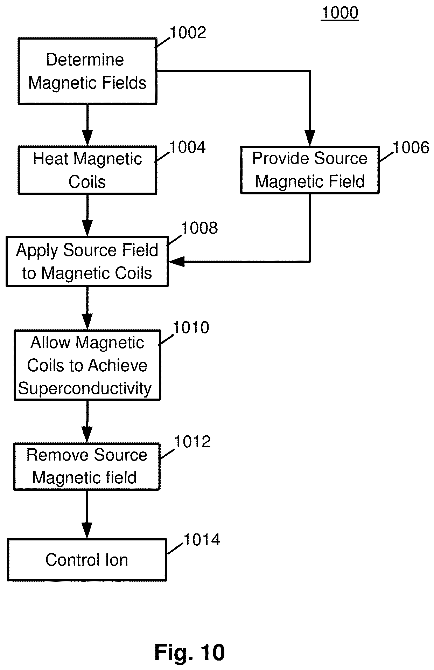

Fig. 10 is a flow diagram illustrating a method 900 for providing a magnetic field for a system using integrated magnetic coils according to some embodiments. In some embodiments, magnetic fields are determined in block 1002. The magnetic fields may be determined from analysis of a region where the system may be deployed, using data from previous ion handling or control processes, from test ions tested in the system, or from another method, system or process.

In block 1004, at least a portion of one or more selected magnetic coils is heated, which terminates or stops the superconductivity of the selected magnetic coils. In some embodiments, cooling for maintaining superconducting temperatures and a suitable ion handling environment may be maintained, while a portion of the targets magnetic coils is heated above a critical superconducting temperature. Once at least a portion of the magnetic coil rises above the temperature required for superconduction, the coil may have a magnetic field applied.

In block 1006 one or more source fields are provided. In some embodiments, a source coil associated with a selected or target magnetic coil is energized or otherwise caused to provide a magnetic field that is applied to the associated or target magnetic coil In other embodiments, a global or large scale magnetic field may be applied to one or more selected target magnetic coils, for example, by an external field source such as an eternal magnetic coil, a magnet, or the like.

In block 1008, the source field is applied to the magnetic coils. In some embodiments, providing the source field after the magnetic coils lose their superconducting property is sufficient to set the magnet field in the target magnetic coils. In some embodiments, the source field is brought into the region of the target magnetic coils so that the target magnetic coils have the desired magnetic field applied. This may include generating a stronger field than is intended to be applied to the magnetic coils, and spacing the source coil from the target magnetic coil at a distance where the field actually reaching the target magnetic coil is the desired magnetic field. In other embodiments, a source coil may have an electric current applied to it to generate a magnetic field, and the magnetic field at the target magnetic coil may be measured to determine the applied magnetic field, and to adjust the applied magnetic field at the target magnetic coil if necessary.

In block 1010, the magnetic coils are allowed to achieve superconductivity. The desired magnetic flux may be maintained at the target magnetic coils while the target magnetic coils are allowed to achieve superconductivity by, for example, dropping in temperature below a critical superconducting temperature. In some embodiments, heating of the target magnetic coil may be terminated while the source magnetic field is applied to the target magnetic coil, with the supercooled ion handling environment cooling the previously heated portion of the target magnetic coil below superconducting temperatures, causing the magnetic coil to achieve superconductive properties. When the magnetic coil becomes superconductive, the magnetic coil locks in, or maintains, the magnetic flux source applied to it. Therefore, in block 1012, the source magnetic field is removed, and in block 1014, one or more ions are used, processed, measured, moved, or otherwise controlled under the effects of the magnetic field provided by the magnetic coil.

An embodiment system includes one or more lane elements disposed in a substrate, an electrode controller, one or more direct current (DC) elements disposed in the substrate and connected to the electrode controller, one or more radio frequency (RF) electrodes, an RF controller connected to the one or more RF electrodes and configured to provide an RF signal to the one or more RF electrodes, one or more magnetic coils, where each magnetic coil of the one or more magnetic coils has a portion associated with at least a portion of a DC element of the one or more DC elements, where each magnetic coil of the one or more magnetic coils is configured to be superconductive below a critical superconducting temperature, and a magnetic coil controller connected to each magnetic coil of the one or more magnetic coils, where the magnetic coil controller is configured to control the superconductivity and the magnetic flux of each magnetic coil of the one or more magnetic coils in relation to a source magnetic field.

In some embodiments, the one or more RF electrodes include a first radio frequency (RF) electrode disposed at a first side of a first lane element portion of a lane element of the one or more lane elements, where the first RF electrode is disposed between the first side and a first group of DC electrodes of the one or more DC electrodes, where the first RF electrode is laterally spaced apart from the first side, and where the one or more RF electrodes further includes a second RF electrode disposed at a second side of the first lane element portion and between the second side and a second group of DC electrodes of the one or more DC electrodes, where the second RF electrode is laterally spaced apart from the second side. In some embodiments, the first RF electrode, the second RF electrode, the one or more DC elements, and the one or more lane elements are disposed in a first layer, where the one or more magnetic coils are disposed in a second layer below the first layer. In some embodiments, the one or more magnetic coils include a first magnetic coil and a second magnetic coil, where at least the first lane element portion is associated with a first portion of the first magnetic coil and a second portion of the second magnetic coil, where the first magnetic coil extends from directly under the first RF electrode to directly under the first group of DC electrodes, and where the second magnetic coil extends from directly under the second RF electrode to directly under the second group of DC electrodes. In some embodiments, the one or more magnetic coils includes a first magnetic coil associated with the lane element, and where at least a first portion of the first magnetic coil is disposed directly underneath the lane element. In some embodiments, the one or more magnetic coils includes a first magnetic coil and a second magnetic coil that is disposed inside the first magnetic coil, and the first magnetic coil and the second magnetic coil are centered on the lane element, and where the magnetic coil controller is configured to set a first magnetic field of the first magnetic coil separately from a second magnetic field of the second magnetic coil. In some embodiments, each magnetic coil of the one or more magnetic coils has a heater disposed on at least a portion of the respective magnetic coil, and the magnetic coil controller is configured to cause the heater to heat a portion of the respective magnetic coil above the critical superconducting temperature. In some embodiments, the magnetic coil controller is further configured to provide a source field to a target magnetic coil while the magnetic coil controller controls the heater to heat the portion of the target magnetic coil above the critical superconducting temperature, where the magnetic coil controller is further configured control the heater to stop heating the magnetic coil and to permit the magnetic coil to reach the critical superconducting temperature and become super conducting while the source field is applied.

An embodiment system includes one or more direct current (DC) elements, an electrode controller connected to each DC element of the one or more DC elements and configured to cause the one or more DC elements to generate a DC field by providing one or more voltages to the one or more DC elements, one or more magnetic coils, where each magnetic coil of the one or more magnetic coils, and where each magnetic coil of the one or more magnetic coils is configured to be superconductive below a critical superconducting temperature, a magnetic coil controller connected to each magnetic coil of the one or more magnetic coils, where the magnetic coil controller is configured to create a localized magnetic field by setting a magnetic field at at least one magnetic coil of the one or more magnetic coils, a plurality of radio frequency (RF) electrodes, and an RF controller connected to each RF electrode of the plurality of RF electrodes, where the RF controller is configured to control contain an ion by providing an RF signal to the plurality of RF electrodes.

In some embodiments, the system further includes one or more lane elements, where the plurality of RF electrodes includes a first RF electrode disposed at a first side of a first lane element portion of a lane element of the one or more lane elements, where the first RF electrode is disposed between the first side and a first group of DC electrodes of the one or more DC electrodes, where the first RF electrode is laterally spaced apart from the first side, and where the plurality of RF electrodes further includes a second RF electrode disposed at a second side of the first lane element portion and between the second side and a second group of DC electrodes of the one or more DC electrodes, where the second RF electrode is laterally spaced apart from the second side. In some embodiments, the one or more magnetic coils include a first magnetic coil and a second magnetic coil, where at least the first lane element portion is associated with a first portion of the first magnetic coil and a second portion of the second magnetic coil. In some embodiments, each magnetic coil of the one or more magnetic coils has a heater disposed on at least a portion of the respective magnetic coil, and where the magnetic coil controller being configured to create the localized magnetic field by setting the magnetic field at at least one magnetic coil of the one or more magnetic coils includes the magnetic coil controller being configured to cause the heater to heat a portion of the respective magnetic coil above the critical superconducting temperature. In some embodiments, the system includes one or more source coils connected to the magnetic coil controller, where each source coil is associated with different magnetic coil of the one or more magnetic coils, where the magnetic coil controller being configured to create the localized magnetic field by setting the magnetic field at at least one magnetic coil of the one or more magnetic coils further includes the magnetic coil controller being configured to provide a source field to a target magnetic coil while the magnetic coil controller controls the heater to heat the portion of the target magnetic coil above the critical superconducting temperature, where the magnetic coil controller is configured to control a first source coil of the one or more source coils to provide the source field to the target magnetic coil, and control the heater to stop heating the magnetic coil and to permit the magnetic coil to reach the critical superconducting temperature and become super conducting while the source field is applied. In some embodiments, the system is an atomic clock, where each DC element of the one or more DC elements is a DC endcap, where RF electrodes of the plurality of RF electrodes are disposed around an ion containment area. In some embodiments, the system includes a plurality of RF ground elements disposed around the ion containment area, where the plurality of RF electrodes and the plurality of RF ground elements bound the ion containment area.

An exemplary method includes creating, by a magnetic coil controller connected to each magnetic coil of one or more magnetic coils of a system for trapping ions, a localized magnetic field by setting a magnetic field at least one magnetic coil of the one or more magnetic coils, confining, by an radio frequency (RF) controller connected to each RF electrode of a plurality of RF electrodes of the system, an ion over at least one lane element of the system by providing an RF signal to the plurality of RF electrodes, and controlling, by application of a direct current (DC) voltage applies to one or more DC elements of the system, an ion in the localized magnetic field.

In some embodiments, the creating the localized magnetic field by setting the magnetic field at the one or more magnetic coils includes causing a heater disposed on at least a portion of a target magnetic coil of the one or more magnetic coils to heat a portion of the target magnetic coil above a critical superconducting temperature. In some embodiments, creating the localized magnetic field by setting the magnetic field at the at least one magnetic coil further includes providing a source field to the target magnetic coil while the heater heats the portion of the target magnetic coil above the critical superconducting temperature, and controlling the heater to stop heating the target magnetic coil and to permit the target magnetic coil to reach the critical superconducting temperature and become super conducting while the source field is applied. In some embodiments, providing the source field to the target magnetic coil includes cause a first source coil associated with the target magnetic coil to provide the source field to the target magnetic coil. In some embodiments, the at least one magnetic coil includes two or more magnetic coils arranged in grid, and the creating the localized magnetic field by setting the magnetic field at least one magnetic coil of the one or more magnetic coils includes setting polarities for magnetic fields of the two or more magnetic coils in a checkerboard pattern.

Although the present disclosure is not so limited, the following numbered examples demonstrate one or more aspects of the disclosure.

Example 1. A system, comprising: one or more lane elements disposed in a substrate; an electrode controller; one or more direct current (DC) elements disposed in the substrate and connected to the electrode controller; one or more radio frequency (RF) electrodes; an RF controller connected to the one or more RF electrodes and configured to provide an RF signal to the one or more RF electrodes; one or more magnetic coils, wherein each magnetic coil of the one or more magnetic coils has a portion associated with at least a portion of a DC element of the one or more DC elements, wherein each magnetic coil of the one or more magnetic coils is configured to be superconductive below a critical superconducting temperature; and a magnetic coil controller connected to each magnetic coil of the one or more magnetic coils, wherein the magnetic coil controller is configured to control the superconductivity and the magnetic flux of each magnetic coil of the one or more magnetic coils in relation to a source magnetic field.

Example 2. The system of Example 1, wherein the one or more RF electrodes comprise a first radio frequency (RF) electrode disposed at a first side of a first lane element portion of a lane element of the one or more lane elements, wherein the first RF electrode is disposed between the first side and a first group of DC electrodes of the one or more DC electrodes, wherein the first RF electrode is laterally spaced apart from the first side; and wherein the one or more RF electrodes further comprise a second RF electrode disposed at a second side of the first lane element portion and between the second side and a second group of DC electrodes of the one or more DC electrodes, wherein the second RF electrode is laterally spaced apart from the second side.

Example 3. The system of Example 2, wherein the first RF electrode, the second RF electrode, the one or more DC elements, and the one or more lane elements are disposed in a first layer, wherein the one or more magnetic coils are disposed in a second layer below the first layer.

Example 4. The system of Example 3, wherein the one or more magnetic coils comprise a first magnetic coil and a second magnetic coil, wherein at least the first lane element portion is associated with a first portion of the first magnetic coil and a second portion of the second magnetic coil, wherein the first magnetic coil extends from directly under the first RF electrode to directly under the first group of DC electrodes, and wherein the second magnetic coil extends from directly under the second RF electrode to directly under the second group of DC electrodes.

Example 5. The system of Example 3, wherein the one or more magnetic coils comprise a first magnetic coil associated with the lane element, and wherein at least a first portion of the first magnetic coil is disposed directly underneath the lane element.

Example 6. The system of Example 3, wherein the one or more magnetic coils comprise a first magnetic coil and a second magnetic coil that is disposed inside the first magnetic coil, and wherein the first magnetic coil and the second magnetic coil are centered on the lane element, and wherein the magnetic coil controller is configured to set a first magnetic field of the first magnetic coil separately from a second magnetic field of the second magnetic coil.

Example 7. The system of one of the preceding Examples, wherein each magnetic coil of the one or more magnetic coils has a heater disposed on at least a portion of the respective magnetic coil, and wherein the magnetic coil controller is configured to cause the heater to heat a portion of the respective magnetic coil above the critical superconducting temperature.

Example 8. The system of Example 7, wherein the magnetic coil controller is further configured to provide a source field to a target magnetic coil while the magnetic coil controller controls the heater to heat the portion of the target magnetic coil above the critical superconducting temperature, wherein the magnetic coil controller is further configured control the heater to stop heating the magnetic coil and to permit the magnetic coil to reach the critical superconducting temperature and become super conducting while the source field is applied.

Example 9. A system, comprising: one or more direct current (DC) elements; an electrode controller connected to each DC element of the one or more DC elements and configured to cause the one or more DC elements to generate a DC field by providing one or more voltages to the one or more DC elements; one or more magnetic coils, wherein each magnetic coil of the one or more magnetic coils, and wherein each magnetic coil of the one or more magnetic coils is configured to be superconductive below a critical superconducting temperature; a magnetic coil controller connected to each magnetic coil of the one or more magnetic coils, wherein the magnetic coil controller is configured to create a localized magnetic field by setting a magnetic field at at least one magnetic coil of the one or more magnetic coils; a plurality of radio frequency (RF) electrodes; and an RF controller connected to each RF electrode of the plurality of RF electrodes, wherein the RF controller is configured to control contain an ion by providing an RF signal to the plurality of RF electrodes.

Example 10. The system of Example 9, further comprising one or more lane elements; wherein the plurality of RF electrodes comprises a first RF electrode disposed at a first side of a first lane element portion of a lane element of the one or more lane elements, wherein the first RF electrode is disposed between the first side and a first group of DC electrodes of the one or more DC electrodes, wherein the first RF electrode is laterally spaced apart from the first side; and wherein the plurality of RF electrodes further comprises a second RF electrode disposed at a second side of the first lane element portion and between the second side and a second group of DC electrodes of the one or more DC electrodes, wherein the second RF electrode is laterally spaced apart from the second side.

Example 11. The system of Example 10, wherein the one or more magnetic coils comprise a first magnetic coil and a second magnetic coil, wherein at least the first lane element portion is associated with a first portion of the first magnetic coil and a second portion of the second magnetic coil.

Example 12. The system of one of Examples 9 to 11, wherein each magnetic coil of the one or more magnetic coils has a heater disposed on at least a portion of the respective magnetic coil, and wherein the magnetic coil controller being configured to create the localized magnetic field by setting the magnetic field at at least one magnetic coil of the one or more magnetic coils comprise the magnetic coil controller being configured to cause the heater to heat a portion of the respective magnetic coil above the critical superconducting temperature.

Example 13. The system of Example 12, further comprising one or more source coils connected to the magnetic coil controller, wherein each source coil is associated with different magnetic coil of the one or more magnetic coils; wherein the magnetic coil controller being configured to create the localized magnetic field by setting the magnetic field at at least one magnetic coil of the one or more magnetic coils further comprises the magnetic coil controller being configured to: provide a source field to a target magnetic coil while the magnetic coil controller controls the heater to heat the portion of the target magnetic coil above the critical superconducting temperature, wherein the magnetic coil controller is configured to control a first source coil of the one or more source coils to provide the source field to the target magnetic coil; and control the heater to stop heating the magnetic coil and to permit the magnetic coil to reach the critical superconducting temperature and become super conducting while the source field is applied.

Example 14. The system of one of Examples 9 to 13, wherein the system is an atomic clock, wherein each DC element of the one or more DC elements is a DC endcap, wherein RF electrodes of the plurality of RF electrodes are disposed around an ion containment area.

Example 15. The system of Example 14, further comprising a plurality of RF ground elements disposed around the ion containment area, wherein the plurality of RF electrodes and the plurality of RF ground elements bound the ion containment area.

Example 16. A method, comprising: creating, by a magnetic coil controller connected to each magnetic coil of one or more magnetic coils of a system for trapping ions, a localized magnetic field by setting a magnetic field at least one magnetic coil of the one or more magnetic coils; confining, by an radio frequency (RF) controller connected to each RF electrode of a plurality of RF electrodes of the system, an ion over at least one lane element of the system by providing an RF signal to the plurality of RF electrodes; and controlling, by application of a direct current (DC) voltage applies to one or more DC elements of the system, an ion in the localized magnetic field.

Example 17. The method of Example 16, wherein the creating the localized magnetic field by setting the magnetic field at the one or more magnetic coils comprises causing a heater disposed on at least a portion of a target magnetic coil of the one or more magnetic coils to heat a portion of the target magnetic coil above a critical superconducting temperature.

Example 18. The method of Example 17, wherein the creating the localized magnetic field by setting the magnetic field at the at least one magnetic coil further comprises:
providing a source field to the target magnetic coil while the heater heats the portion of the target magnetic coil above the critical superconducting temperature; and controlling the heater to stop heating the target magnetic coil and to permit the target magnetic coil to reach the critical superconducting temperature and become super conducting while the source field is applied.

Example 19. The method of Example 18, wherein the providing the source field to the target magnetic coil comprises cause a first source coil associated with the target magnetic coil to provide the source field to the target magnetic coil.

Example 20. The method of one of Examples 16 to 19, wherein the at least one magnetic coil comprises two or more magnetic coils arranged in grid; and wherein the creating the localized magnetic field by setting the magnetic field at least one magnetic coil of the one or more magnetic coils comprises setting polarities for magnetic fields of the two or more magnetic coils in a checkerboard pattern.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A system, comprising:
one or more lane elements disposed in a substrate;
an electrode controller;
one or more direct current (DC) elements disposed in the substrate and connected to the electrode controller;
one or more radio frequency (RF) electrodes;
an RF controller connected to the one or more RF electrodes and configured to provide an RF signal to the one or more RF electrodes;
one or more magnetic coils, wherein each magnetic coil of the one or more magnetic coils has a portion associated with at least a portion of a DC element of the one or more DC elements, wherein each magnetic coil of the one or more magnetic coils is configured to be superconductive below a critical superconducting temperature; and
a magnetic coil controller connected to each magnetic coil of the one or more magnetic coils, wherein the magnetic coil controller is configured to control the superconductivity and the magnetic flux of each magnetic coil of the one or more magnetic coils in relation to a source magnetic field.

2. The system of Claim 1, wherein the one or more RF electrodes comprise a first radio frequency (RF) electrode disposed at a first side of a first lane element portion of a lane element of the one or more lane elements, wherein the first RF electrode is disposed between the first side and a first group of DC electrodes of the one or more DC electrodes, wherein the first RF electrode is laterally spaced apart from the first side; and
wherein the one or more RF electrodes further comprise a second RF electrode disposed at a second side of the first lane element portion and between the second side and a second group of DC electrodes of the one or more DC electrodes, wherein the second RF electrode is laterally spaced apart from the second side.

3. The system of Claim 2, wherein the first RF electrode, the second RF electrode, the one or more DC elements, and the one or more lane elements are disposed in a first layer, wherein the one or more magnetic coils are disposed in a second layer below the first layer.

4. The system of Claim 3, wherein the one or more magnetic coils comprise a first magnetic coil and a second magnetic coil, wherein at least the first lane element portion is associated with a first portion of the first magnetic coil and a second portion of the second magnetic coil, wherein the first magnetic coil extends from directly under the first RF electrode to directly under the first group of DC electrodes, and wherein the second magnetic coil extends from directly under the second RF electrode to directly under the second group of DC electrodes.

5. The system of Claim 3, wherein the one or more magnetic coils comprise a first magnetic coil associated with the lane element, and wherein at least a first portion of the first magnetic coil is disposed directly underneath the lane element.

6. The system of Claim 3, wherein the one or more magnetic coils comprise a first magnetic coil and a second magnetic coil that is disposed inside the first magnetic coil, and wherein the first magnetic coil and the second magnetic coil are centered on the lane element, and
wherein the magnetic coil controller is configured to set a first magnetic field of the first magnetic coil separately from a second magnetic field of the second magnetic coil.

7. The system of one of the preceding Claims, wherein each magnetic coil of the one or more magnetic coils has a heater disposed on at least a portion of the respective magnetic coil, and wherein the magnetic coil controller is configured to cause the heater to heat a portion of the respective magnetic coil above the critical superconducting temperature.

8. The system of Claim 7, wherein the magnetic coil controller is further configured to provide a source field to a target magnetic coil while the magnetic coil controller controls the heater to heat the portion of the target magnetic coil above the critical superconducting temperature, wherein the magnetic coil controller is further configured control the heater to stop heating the magnetic coil and to permit the magnetic coil to reach the critical superconducting temperature and become super conducting while the source field is applied.

9. A system, comprising:
one or more direct current (DC) elements;
an electrode controller connected to each DC element of the one or more DC elements and configured to cause the one or more DC elements to generate a DC field by providing one or more voltages to the one or more DC elements;
one or more magnetic coils, wherein each magnetic coil of the one or more magnetic coils, and wherein each magnetic coil of the one or more magnetic coils is configured to be superconductive below a critical superconducting temperature;
a magnetic coil controller connected to each magnetic coil of the one or more magnetic coils, wherein the magnetic coil controller is configured to create a localized magnetic field by setting a magnetic field at at least one magnetic coil of the one or more magnetic coils;
a plurality of radio frequency (RF) electrodes; and
an RF controller connected to each RF electrode of the plurality of RF electrodes,
wherein the RF controller is configured to control contain an ion by providing an RF signal to the plurality of RF electrodes.

10. The system of Claim 9, further comprising one or more lane elements;
wherein the plurality of RF electrodes comprises a first RF electrode disposed at a first side of a first lane element portion of a lane element of the one or more lane elements, wherein the first RF electrode is disposed between the first side and a first group of DC electrodes of the one or more DC electrodes, wherein the first RF electrode is laterally spaced apart from the first side; and
wherein the plurality of RF electrodes further comprises a second RF electrode disposed at a second side of the first lane element portion and between the second side and a second group of DC electrodes of the one or more DC electrodes, wherein the second RF electrode is laterally spaced apart from the second side.

11. The system of Claim 10, wherein the one or more magnetic coils comprise a first magnetic coil and a second magnetic coil, wherein at least the first lane element portion is associated with a first portion of the first magnetic coil and a second portion of the second magnetic coil.

12. The system of one of Claims 9 to 11, wherein each magnetic coil of the one or more magnetic coils has a heater disposed on at least a portion of the respective magnetic coil, and wherein the magnetic coil controller being configured to create the localized magnetic field by setting the magnetic field at at least one magnetic coil of the one or more magnetic coils comprise the magnetic coil controller being configured to cause the heater to heat a portion of the respective magnetic coil above the critical superconducting temperature.

13. The system of Claim 12, further comprising one or more source coils connected to the magnetic coil controller, wherein each source coil is associated with different magnetic coil of the one or more magnetic coils;
wherein the magnetic coil controller being configured to create the localized magnetic field by setting the magnetic field at at least one magnetic coil of the one or more magnetic coils further comprises the magnetic coil controller being configured to:
provide a source field to a target magnetic coil while the magnetic coil controller controls the heater to heat the portion of the target magnetic coil above the critical superconducting temperature, wherein the magnetic coil controller is configured to control a first source coil of the one or more source coils to provide the source field to the target magnetic coil; and
control the heater to stop heating the magnetic coil and to permit the magnetic coil to reach the critical superconducting temperature and become super conducting while the source field is applied.

14. A method, comprising:
creating, by a magnetic coil controller connected to each magnetic coil of one or more magnetic coils of a system for trapping ions, a localized magnetic field by setting a magnetic field at least one magnetic coil of the one or more magnetic coils;
confining, by an radio frequency (RF) controller connected to each RF electrode of a plurality of RF electrodes of the system, an ion over at least one lane element of the system by providing an RF signal to the plurality of RF electrodes; and
controlling, by application of a direct current (DC) voltage applies to one or more DC elements of the system, an ion in the localized magnetic field.

15. The method of Claim 14, wherein the creating the localized magnetic field by setting the magnetic field at the one or more magnetic coils comprises causing a heater disposed on at least a portion of a target magnetic coil of the one or more magnetic coils to heat a portion of the target magnetic coil above a critical superconducting temperature.
